# FASCICULE DE BREVET EUROPEEN

(11) **EP 2 941 382 B1**
(45) Date de publication et mention de la délivrance du brevet: **26.12.2018**
(21) Numéro de dépôt: 14701814.7
(22) Date de dépôt: 07.01.2014
(51) Int. Cl.: B64D 15/12, B64D 33/02, F01D 25/02

(54) **DISPOSITIF DE DÉGIVRAGE ÉLECTRIQUE POUR ÉLÉMENT DE NACELLE POUR TURBORÉACTEUR**
ELEKTRISCHE ENTEISUNGSVORRICHTUNG FÜR EINE TURBOSTRAHL-TRIEBWERKSGONDEL
ELECTRIC DE-ICING DEVICE FOR TURBOJET ENGINE NACELLE

(30) Priorité: 07.01.2013 FR 1350115
(43) Date de publication de la demande: 11.11.2015
(73) Titulaire: Safran Nacelles, 76700 Gonfreville-l'Orcher (FR)
(72) Inventeur: PEREIRA, David, F-78180 Montigny-le-Bretonneux (FR); MAALIOUNE, Hakim, F-78630 Orgeval (FR); COAT-LENZOTTI, Caroline, F-76290 Montivilliers (FR)
(74) Mandataire: Gaillarde, Frédéric F. Ch.
(86) Numéro de dépôt international: PCT/FR2014/050016
(87) Numéro de publication internationale: WO 2014/106725

(56) Documents cités:
- EP-A1- 1 715 159
- EP-B1- 1 893 484
- DE-A1- 2 424 784
- DE-A1-102008 051 553
- FR-A1- 2 887 518
- US-A1- 2011 290 784

## Description

La présente invention se rapporte à un dispositif de dégivrage/ d'antigivrage électrique notamment pour lèvre d'entrée d'air de nacelle pour turboréacteur/turbopropulseur d'aéronef, et à une nacelle équipée d'un tel dispositif. L'invention se rapporte également à un procédé de dégivrage/d'antigivrage d'un élément de nacelle et d'un élément d'aéronef.

Un avion est propulsé par un ou plusieurs ensembles propulsifs comprenant chacun un turboréacteur/turbopropulseur logé dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée d'air adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser l'air vers les aubes de la soufflante. L'ensemble est rattaché en amont d'un carter de la soufflante appartenant à la section amont de la nacelle.

En vol, selon les conditions de température et d'humidité, de la glace peut se former sur la nacelle, notamment au niveau de la surface externe de la lèvre d'entrée d'air. La présence de glace ou de givre modifie les propriétés aérodynamiques de l'entrée d'air et perturbe l'acheminement de l'air vers la soufflante. De plus, la formation de givre sur l'entrée d'air de la nacelle et l'ingestion de glace par le moteur en cas de détachement de blocs de glace peuvent endommager le moteur, et présenter un risque pour la sécurité du vol.

Une solution pour dégivrer la surface externe consiste à éviter que de la glace ne se forme sur cette surface externe en maintenant la surface concernée à une température suffisante.

Ainsi, il est connu, par exemple du brevet US 4 688 757, de prélever de l'air chaud au niveau du compresseur du turboréacteur et de l'amener au niveau de la lèvre d'entrée d'air afin de réchauffer les parois.

Toutefois, un tel dispositif nécessite un système de conduits d'amenée d'air chaud entre le turboréacteur et l'entrée d'air, ainsi qu'un système d'évacuation de l'air chaud au niveau de la lèvre d'entrée d'air. Ceci augmente la masse de l'ensemble propulsif, ce qui n'est pas souhaitable.

Afin d'alléger au maximum les structures utilisées dans la constitution de nacelles, et plus généralement d'équipement aéronautique, il est courant de recourir à l'emploi de matériaux composites.

L'emploi de ces matériaux, notamment pour réaliser la lèvre d'entrée d'air de nacelle, est généralement incompatible avec les dispositifs de dégivrage ou d'antigivrage pneumatique précités.

En effet, la température d'exposition de ces matériaux ne doit généralement pas dépasser un seuil critique sous peine de dénaturation du matériau et donc d'endommagement de la structure.

Ces inconvénients ont pu être palliés notamment grâce à des systèmes de dégivrage/antigivrage électriques.

On pourra citer notamment le document EP 1 495 963 bien que de nombreux autres documents se rapportent au dégivrage électrique et à ses développements.

La mise en oeuvre d'un dispositif de dégivrage électrique utilise des ensembles de résistances chauffantes, également appelés tapis chauffants, implantés au niveau de la lèvre d'entrée d'air à proximité de la surface externe et alimentés électriquement par une source d'alimentation électrique.

On peut également citer la demande de brevet européen EP 1 953 085, qui se rapporte à une architecture électrique utilisée pour alimenter des tapis chauffants.

Les architectures décrites dans cette demande prévoient une source d'alimentation électrique issue d'une génératrice dédiée à l'ensemble des tapis chauffants.

Ces architectures permettent de réguler la température dans différentes zones de l'entrée d'air de la nacelle. Toutefois, ces systèmes de dégivrage sont complexes, lourds en terme de masse, de fiabilité et de disponibilité.

Les documents US 2011/0290784 A1 et DE 10 2008 051 553 A1 divulguent un système de chauffage électrique comprenant plusieurs couches chauffantes, chacune alimentée par un circuit d'alimentation électrique particulier.

La présente invention vise à fournir un dispositif de dégivrage facile d'installation, n'endommageant pas les matériaux composites, peu coûteux en terme de masse, d'une grande fiabilité et à haute disponibilité.

Pour ce faire, la présente invention se rapporte à un dispositif de dégivrage/antigivrage électrique pour élément de nacelle pour turboréacteur/turbopropulseur, comprenant :
- un ensemble chauffant comprenant deux étages chauffants disposés dans l'élément de nacelle à protéger contre le givre ;
- un circuit d'alimentation en énergie électrique délivrant une tension principale au premier étage de l'ensemble chauffant, et comprenant :
   ∘ une source d'alimentation électrique ;
   ∘ un circuit de dégivrage/antigivrage relié à l'ensemble chauffant et alimenté en tension par ladite source d'alimentation électrique ;
le dispositif de dégivrage étant caractérisé en ce qu'il comprend en outre des moyens pour délivrer une tension complémentaire alimentant le deuxième étage de l'ensemble chauffant.

Ainsi, en prévoyant des moyens pour délivrer une tension complémentaire de la tension principale au deuxième étage chauffant, le deuxième étage est alimenté uniquement lors de phases particulières d'un vol, ce qui permet de limiter considérablement par rapport à l'art antérieur la consommation énergétique de l'ensemble chauffant. A titre d'exemple, le deuxième étage chauffant peut être alimenté en tension lors de phases de montée ou de descente de l'avion. En outre, le deuxième étage constitue une sécurité supplémentaire en cas de dysfonctionnement du premier étage.

De plus, le circuit électrique unique permet l'alimentation en énergie électrique de l'ensemble chauffant, ce qui simplifie également l'architecture du réseau électrique pour élément chauffant par rapport à l'art antérieur.

Selon l'invention, les moyens pour délivrer ladite tension complémentaire comprennent en outre :
- au moins un capteur de température positionné dans l'élément de nacelle à protéger contre le givre ;
- au moins un contacteur intégré au circuit de dégivrage et en outre relié en entrée à la source d'alimentation électrique et en sortie au deuxième étage chauffant de l'ensemble chauffant ;
- au moins une unité de commande reliée aux capteurs de température et au contacteur, adaptée pour commander alternativement le passage du contacteur entre une position inhibée selon laquelle le deuxième étage n'est pas alimenté en tension et une position fermée selon laquelle le deuxième étage est alimenté en tension.

Optionnellement, l'unité de commande est intégrée au circuit de dégivrage, ce qui permet de prévoir un dispositif de dégivrage compact et facile d'intégration.

Selon un premier mode de réalisation du dispositif de dégivrage selon l'invention, la source d'alimentation électrique est constituée par un réseau électrique avion.

Selon ce mode de réalisation, le circuit de dégivrage comprend :
- un étage de conversion de puissance alimenté en tension par le réseau électrique avion et relié à l'unité de commande, ledit étage de conversion de puissance étant adapté pour convertir la tension alternative délivrée par le réseau électrique avion en tension continue variable ;
- un contacteur dont l'entrée est reliée à la sortie de l'étage de conversion de puissance et la sortie est reliée au deuxième étage chauffant de l'ensemble chauffant, ledit contacteur étant commandé par l'unité de commande.

Selon un deuxième mode de réalisation du dispositif de dégivrage selon l'invention, la source d'alimentation électrique est constituée par un générateur électrique.

Selon ce mode de réalisation, le générateur électrique est en outre relié au premier étage de l'ensemble chauffant, et le circuit de dégivrage/antigivrage est constitué par un contacteur dont l'entrée est reliée audit générateur électrique et la sortie est reliée au deuxième étage chauffant de l'ensemble chauffant, ledit contacteur étant commandé par l'unité de commande.

En outre, l'ensemble chauffant comprend quatre réchauffeurs répartis sur la périphérie de l'élément de nacelle à protéger contre le givre.

L'invention se rapporte également à une nacelle pour turboréacteur ou turbopropulseur comprenant un dispositif de dégivrage/antigivrage selon l'invention, remarquable en ce que l'ensemble chauffant est intégré à une lèvre d'entrée d'air de ladite nacelle.

L'invention se rapporte également à un procédé de dégivrage/antigivrage d'un élément de nacelle pour turboréacteur/turbopropulseur, ladite nacelle comprenant un dispositif de dégivrage/antigivrage selon l'invention, le procédé étant remarquable en ce qu'il comprend les étapes suivantes visant à :
- relever la température d'un élément de nacelle ;
- délivrer au premier étage de l'ensemble chauffant une tension principale variable en fonction de la température relevée ;
- délivrer au deuxième étage de l'ensemble chauffant une tension complémentaire si la valeur de la température de l'élément de nacelle à protéger contre le givre est inférieure à une valeur de température prédéterminée.

Enfin, l'invention concerne un procédé de dégivrage/antigivrage d'un élément d'aéronef, ledit élément comprenant un dispositif de dégivrage/antigivrage selon l'invention, remarquable en ce qu'il comprend les étapes suivantes visant à :
- relever la température d'un élément du composant ;
- délivrer au premier étage de l'ensemble chauffant une tension principale variable en fonction de la température relevée ;
- délivrer au deuxième étage de l'ensemble chauffant une tension complémentaire si la valeur de la température de l'élément d'aéronef à protéger contre le givre est inférieure à une valeur de température prédéterminée.

D'autres caractéristiques et avantages de la présente invention apparaîtront à la lecture de la description qui va suivre et à l'examen des figures ci-annexées, dans lesquelles :
- la figure 1 illustre schématiquement en coupe transversale une lèvre d'entrée d'air de nacelle pour turboréacteur équipée d'un ensemble chauffant ;
- la figure 2 illustre schématiquement en coupe transversale un ensemble chauffant du dispositif de dégivrage ;
- la figure 3 représente un premier mode de réalisation du dispositif de dégivrage selon l'invention ;
- la figure 4 représente en détails le circuit de dégivrage du dispositif de dégivrage selon le premier mode de réalisation ;
- la figure 5 est une illustration d'un deuxième mode de réalisation du dispositif de dégivrage ;
- la figure 6 illustre en détails le circuit de dégivrage du dispositif de dégivrage selon le deuxième mode de réalisation.

Sur l'ensemble des figures, des références identiques ou analogues désignent des organes ou ensembles d'organes identiques ou analogues.

Par ailleurs, les termes « amont » et « aval » sont définis par référence au sens d'écoulement du flux d'air dans la nacelle en fonctionnement jet direct, l'amont de la nacelle correspondant à une partie de la nacelle par laquelle le flux pénètre, et l'aval correspondant à une zone d'éjection dudit flux d'air.

En outre, on entend par « dispositif de dégivrage/antigivrage » tout ensemble adapté pour permettre de dégivrer ou d'éviter la formation du givre.

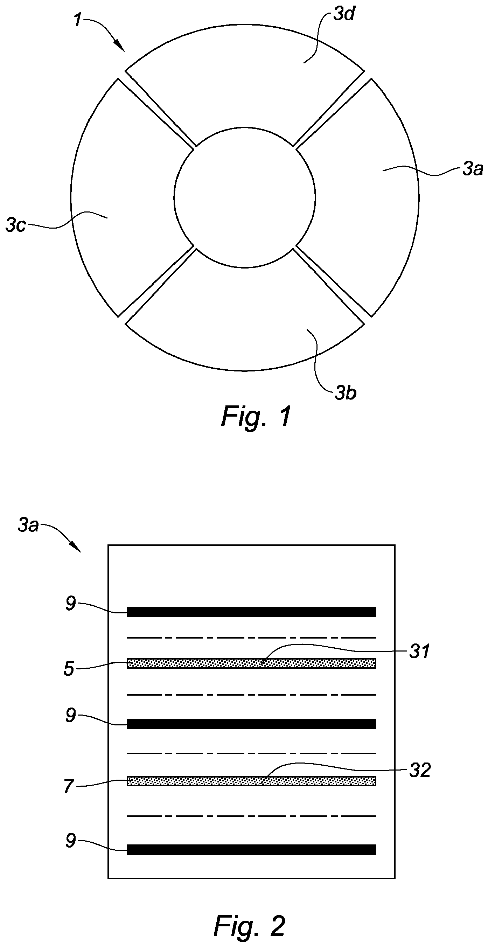

On se réfère à la figure 1, illustrant schématiquement en coupe transversale une lèvre d'entrée d'air de nacelle pour turboréacteur équipée d'un ensemble chauffant 1 comprenant quatre réchauffeurs de conception identique 3a, 3b, 3c, 3d répartis sur la périphérie de la lèvre d'entrée d'air de la nacelle, respectivement « à 3 heures », « à 6 heures », « à 9 heures » et « à 12 heures ».

L'ensemble chauffant est principalement destiné à être intégré à une lèvre d'entrée d'air composite, monolithique ou sandwich, d'une nacelle de turboréacteur. Bien entendu, l'ensemble chauffant peut également équiper d'autres zones de la nacelle ou d'autres zones de l'aéronef. De plus, un tel ensemble ne se restreint pas non plus à une application dans le domaine de l'aéronautique.

En se référant à la figure 2 représentant un réchauffeur 3a en coupe transversale, un tel réchauffeur comprend deux étages chauffants 5 et 7 formant des couches superposées dans l'épaisseur du réchauffeur. Plus précisément, une fois monté dans un élément de nacelle ou d'aéronef à protéger contre le givre, l'étage chauffant 5 recouvre des zones de l'élément à protéger contre le givre les plus proches des zones d'écoulement de l'air, tandis que l'étage chauffant 7, superposé à l'étage chauffant 5, est plus éloigné des zones au contact de l'air qui s'écoule. De façon connue, les étages chauffants sont réalisés dans un matériau métallique conducteur d'électricité.

Chaque étage chauffant 5, 7 est surmonté de part et d'autre d'un isolant électrique 9 typiquement fixé sur les étages chauffants par des moyens adhésifs tels que de la colle. Les éléments isolants 9 sont quant à eux réalisés par exemple à partir d'un pli de verre.

Bien sûr, les éléments résistifs et les éléments isolants peuvent être réalisés en tout autre matériau respectivement conducteur d'électricité et isolant.

Chaque étage chauffant 5, 7 de l'ensemble chauffant est alimenté en énergie électrique par l'intermédiaire d'un circuit d'alimentation électrique unique (non représenté sur cette figure).

Le circuit d'alimentation en énergie électrique comprend une source d'alimentation électrique alimentant en tension un circuit de dégivrage (ou d'antigivrage) relié à l'ensemble chauffant.

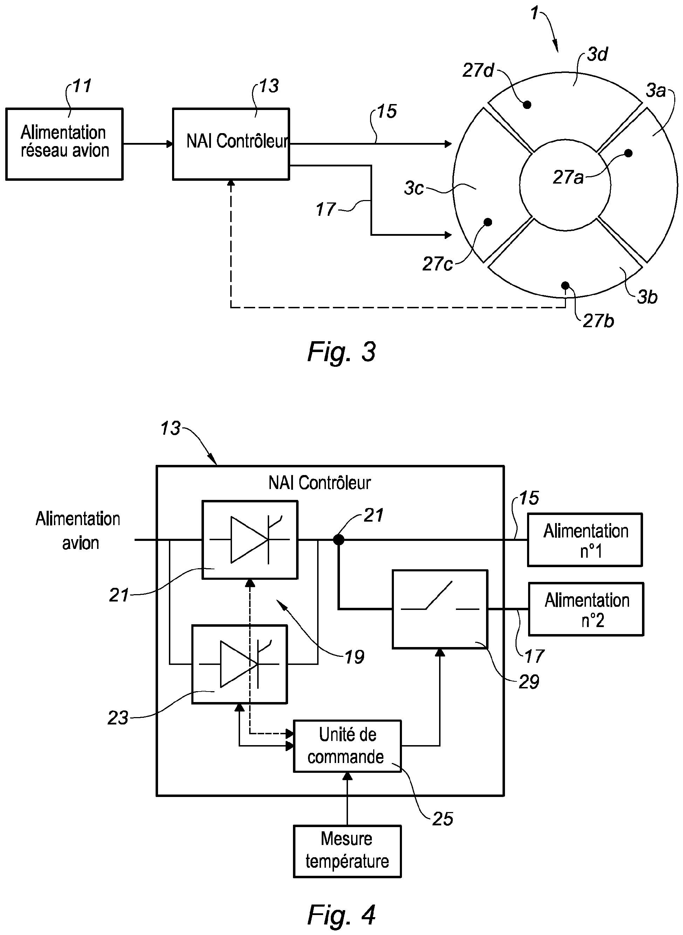

Selon un premier mode de réalisation représenté aux figures 3 et 4, le circuit d'alimentation en énergie électrique comprend une source d'alimentation électrique constituée par le réseau 11 triphasé de l'avion, délivrant typiquement une tension alternative, directement relié à l'entrée d'un circuit de dégivrage/antigivrage 13 (encore appelé « NAI » pour « Nacelle Anti Icing » en terminologie anglo-saxonne).

Le circuit de dégivrage/antigivrage 13 reçoit en sortie des câbles 15, 17, alimentant en tension respectivement le premier et le deuxième étage chauffant de l'ensemble chauffant.

Le circuit de dégivrage/antigivrage 13 comprend selon l'invention un étage de conversion de puissance 19 comprenant deux cellules de commutation 21, 23 redondantes, chacune étant adaptée pour convertir la tension alternative délivrée par le réseau électrique de l'avion en une tension continue variable.

Les cellules 21 et 23 sont reliées à une unité de commande 25, qui active l'une ou l'autre desdites cellules en fonction de leur disponibilité.

L'unité de commande 25 est en outre reliée à des capteurs de température 27a, 27b, 27c, 27d, chacun étant respectivement placé dans chaque réchauffeur 3a, 3b, 3c, 3d.

Le circuit de dégivrage/antigivrage 13 comprend un contacteur 29 dont l'entrée est reliée à la sortie de l'étage de conversion de puissance 19. En sortie du contacteur 29 est prévu le câble 17 en liaison avec le deuxième étage chauffant 7.

Le contacteur 29 est en outre relié à l'unité de commande 25, qui commande le passage alternatif du contacteur 29 entre une position fermée et une position inhibée, comme détaillé ci-après.

A titre d'exemple, le contacteur 29 peut être constitué par un interrupteur électrique ou électromécanique.

Le fonctionnement du dispositif de dégivrage selon le premier mode de réalisation de l'invention va à présent être décrit.

Le réseau électrique avion 11 alimente en tension alternative le circuit de dégivrage/antigivrage 13.

L'étage de conversion de puissance 19, constitué par les cellules de commutation redondantes 21, 23, assure la conversion de la tension alternative délivrée par le réseau électrique 11 en une tension variable.

L'unité de commande 25 choisit d'actionner l'une ou l'autre des cellules de commutation 21, 23 en fonction de leur disponibilité.

Par ailleurs, les capteurs de température 27a, 27b, 27c, 27d retournent à l'unité de commande 25 les valeurs de température relevées au niveau de chaque réchauffeur 3a, 3b, 3c, 3d.

L'unité de commande 25 adapte alors la valeur de la tension de sortie alimentant le premier étage chauffant 5, dite tension principale, de façon à maintenir constante la température de la lèvre quelles que soient les conditions climatiques externes.

Le contacteur 29 se trouve en position inhibée, position selon laquelle aucune tension n'est délivrée au deuxième étage 7 de l'ensemble chauffant.

Lorsque la tension délivrée en sortie du circuit de dégivrage/antigivrage 13 est insuffisante pour maintenir constante la température de la lèvre d'entrée d'air de la nacelle, le capteur de température informe l'unité de commande 25, qui active le passage du contacteur 29 depuis sa position inhibée vers une position fermée, position permettant de délivrer au deuxième étage 7 de l'ensemble chauffant une tension électrique continue variable en complément de la tension principale délivrée au premier étage chauffant 5.

A cet effet, les capteurs de température 27a, 27b, 27c, 27d, l'unité de commande 25 et le contacteur 29 constituent des moyens pour délivrer une tension complémentaire à la tension principale alimentant le deuxième étage de l'ensemble chauffant.

L'alimentation en tension complémentaire du deuxième étage chauffant 7 intervient typiquement lors de phases spécifiques d'un vol, comme celles de montée ou de descente de l'avion.

A titre d'exemple, pendant les phases de montée, le deuxième étage chauffant 7 du réchauffeur 3d est alimenté en tension complémentaire, tandis que lors des phases de descente, le deuxième étage chauffant du réchauffeur 3b sera alimenté en tension complémentaire. En outre, lors de la traversée de nuages extrêmement denses, le deuxième étage chauffant des réchauffeurs 3b et 3d sont alimentés en tension complémentaire.

Plus généralement, les phases de vol nécessitant l'activation du deuxième étage de l'ensemble chauffant sont celles qui nécessitent une puissance électrique telle que la seule puissance fournie au premier étage de l'ensemble chauffant est insuffisante pour maintenir une température empêchant la formation de givre ou de glace ou permettant le dégivrage. Ainsi, l'alimentation du deuxième étage chauffant n'est pas limitée aux seules phases de montée et de descente de l'avion, mais peut également intervenir lorsque l'avion est en régime de croisière, par exemple dans le cas où un évènement particulier modifie brutalement la température de la lèvre d'entrée d'air de la nacelle.

En d'autres termes, le deuxième étage chauffant est alimenté localement et temporairement lorsque les capacités maximum de chauffage du premier étage des réchauffeurs sont atteintes.

En prévoyant d'alimenter en tension le deuxième étage uniquement lors d'événements particuliers de la phase de vol de l'avion, on limite la consommation énergétique du dispositif de dégivrage par rapport à l'art antérieur. En outre, la tension délivrée à chaque étage est adaptée pour maintenir constante la température dans la lèvre d'entrée d'air quelles que soient les conditions externes de température.

De plus, par rapport à l'art antérieur, une source d'alimentation unique permet d'alimenter plusieurs étages chauffants indépendamment l'un de l'autre grâce à un unique contacteur ajouté au circuit de dégivrage.

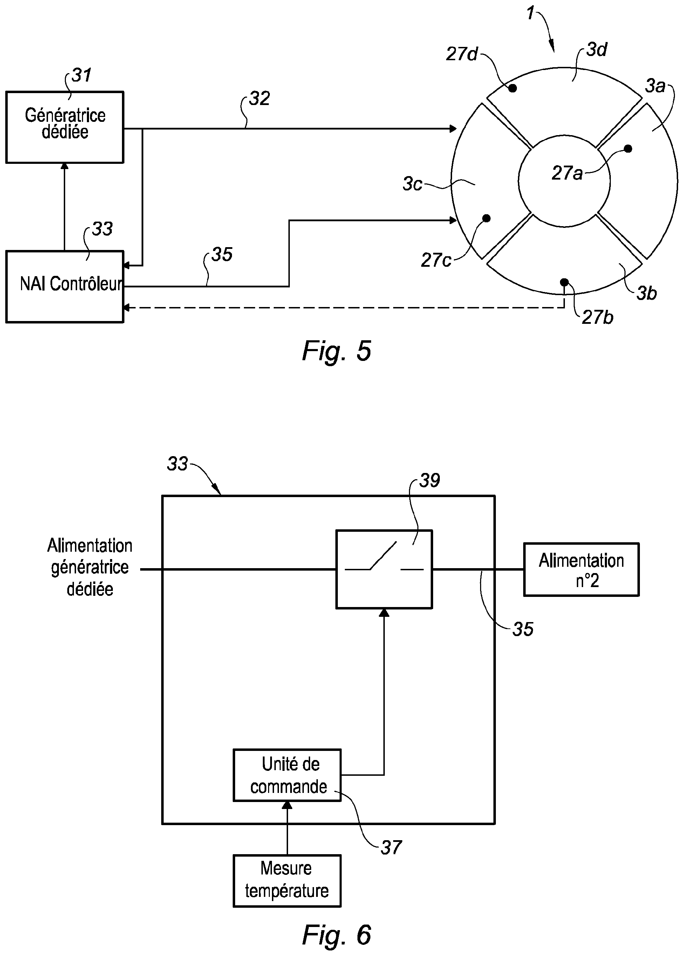

On se réfère à présent aux figures 5 et 6 illustrant le dispositif de dégivrage selon un deuxième mode de réalisation de l'invention.

La source d'alimentation électrique est constituée par un générateur 31 dédié monté sur un boîtier de transmission couplé mécaniquement à un arbre de turbine du moteur.

Le générateur 31 délivre une tension au premier étage de l'ensemble chauffant via un câble 32 et à un circuit de dégivrage (« NAI ») 33, ladite tension ayant une fréquence variable en fonction de la vitesse de rotation de l'arbre de turbine.

Le circuit de dégivrage 33 reçoit en sortie un câble 35 alimentant en tension le deuxième étage chauffant de l'ensemble chauffant.

Le circuit de dégivrage 33 comprend une unité de commande 37 reliée aux capteurs de température 27a, 27b, 27c, 27d.

Selon l'invention, le circuit de dégivrage 33 comprend un unique contacteur 39 relié au câble 35 en liaison avec le deuxième étage chauffant. Le contacteur 39 est activé ou inhibé grâce à l'unité de commande 37 en sortie de laquelle il est relié. A titre d'exemple, le contacteur peut être constitué par un interrupteur électrique ou électromécanique.

Le fonctionnement du dispositif de dégivrage/antigivrage selon le deuxième mode de réalisation de l'invention est similaire au fonctionnement du premier mode de réalisation, à ceci-près que le circuit de dégivrage/antigivrage ne réalise plus de conversion de la tension délivrée par la source d'alimentation électrique.

Le générateur 31 alimente en tension le premier étage chauffant 5 de l'ensemble chauffant et le circuit de dégivrage 33.

Les capteurs de température 27a, 27b, 27c, 27d retournent à l'unité de commande 37 les valeurs de température relevées au niveau de chaque réchauffeur 3a, 3b, 3c et 3d.

L'unité de commande 37 adapte alors la valeur de la tension de sortie alimentant le premier étage chauffant de façon à maintenir constante la température de la lèvre quelles que soient les conditions climatiques externes.

Le contacteur 39 se trouve en position inhibée, position selon laquelle aucune tension n'est délivrée au deuxième étage de l'ensemble chauffant.

Lorsque la tension délivrée par la génératrice est insuffisante pour maintenir constante la température de la lèvre d'entrée d'air de la nacelle, l'unité de commande 37 active le passage du contacteur 39 depuis sa position inhibée vers une position fermée, position permettant de délivrer au deuxième étage 7 de l'ensemble chauffant une tension électrique variable complémentaire de la tension principale délivrée au premier étage chauffant 5.

Comme précédemment, les capteurs de température 27a, 27b, 27c, 27d, l'unité de commande 37 et le contacteur 39 constituent des moyens pour délivrer une tension complémentaire à la tension principale alimentant le deuxième étage de l'ensemble chauffant, l'alimentation en tension complémentaire du deuxième étage intervenant typiquement de préférence lors de phases spécifiques d'un vol, comme celles de montée ou de descente de l'avion.

Grâce à la présente invention, en prévoyant d'alimenter un réseau de plusieurs étages de tapis chauffants par une source d'alimentation électrique unique, le dispositif de dégivrage/antigivrage est simplifié par rapport aux solutions de l'art antérieur.

En effet, la source d'alimentation électrique unique alimente en permanence un premier étage chauffant, celui le plus proche de la zone au contact de l'écoulement de l'air. Lorsque les conditions climatiques exigent une puissance supplémentaire de chauffage, le dispositif de dégivrage selon l'invention alimente en énergie électrique un deuxième étage chauffant, superposé au premier, et plus éloigné de la zone au contact de l'air qui s'écoule. Le deuxième étage agit en quelques sortes à la façon d'un renfort thermique activé ponctuellement par la même source électrique que celle qui alimente de façon permanente le premier étage du réchauffeur.

L e c ontacteur, prévu directement dans le circuit de dégivrage/antigivrage, permet d'alimenter ou non le deuxième étage de l'ensemble chauffant en fonction de la température relevée de l'élément de nacelle à protéger contre le givre, de façon à ce que la température reste constante quelles que soient les conditions climatiques externes.

En outre, le dispositif de dégivrage selon l'invention permet d'améliorer la sécurité du dispositif de dégivrage ce que la disponibilité de l'ensemble chauffant est accrue. En effet, en cas de dysfonctionnement du premier étage de l'ensemble chauffant, l'unité de commande active le contacteur depuis sa position inhibée vers sa position fermée, de façon à alimenter en tension le deuxième étage. Cela permet d'assurer le fonctionnement du dispositif de dégivrage lors d'une panne en vol de l'élément chauffant primaire.

Enfin, comme il va de soi, l'invention ne se limite pas aux seules formes de réalisation de ce dispositif de dégivrage/antigivrage, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Dispositif de dégivrage/antigivrage électrique pour élément de nacelle pour turboréacteur/turbopropulseur, comprenant :
- un ensemble chauffant (1) comprenant deux étages chauffants (5, 7) disposés dans l'élément de nacelle à protéger contre le givre ;
- un circuit d'alimentation en énergie électrique délivrant une tension principale au premier étage (5) de l'ensemble chauffant, et comprenant :
∘ une source d'alimentation électrique (11, 31) ;
∘ un circuit de dégivrage/antigivrage (13, 33) relié à l'ensemble chauffant (1) et alimenté en tension par ladite source d'alimentation électrique (11, 31) ;
le dispositif de dégivrage étant **caractérisé en ce que** les deux étages chauffants (5, 7) forment des couches superposées dans l'épaisseur de l'ensemble chauffant, **en ce qu'**il comprend en outre des moyens (27a, 27b, 27c, 27d, 29, 39, 25, 37) pour délivrer une tension complémentaire alimentant le deuxième étage (7) de l'ensemble chauffant (1), et **en ce que** le circuit d'alimentation électrique est un circuit d'alimentation électrique unique alimentant en énergie électrique chaque étage chauffant (5, 7) de l'ensemble chauffant.

2. Dispositif de dégivrage/antigivrage selon la revendication 1, **caractérisé en ce que** les moyens pour délivrer ladite tension complémentaire comprennent en outre :
- au moins un capteur de température (27a, 27b, 27c, 27d) positionné dans l'élément de nacelle à protéger contre le givre ;
- au moins un contacteur (29, 39) intégré au circuit de dégivrage (13, 33) et en outre relié en entrée à la source d'alimentation électrique (11, 31) et en sortie au deuxième étage chauffant (7) de l'ensemble chauffant (1) ;
- au moins une unité de commande (25, 37) reliée aux capteurs de température (27a, 27b, 27c, 27d) et au contacteur (29, 39), adaptée pour commander alternativement le passage du contacteur entre une position inhibée selon laquelle le deuxième étage (7) n'est pas alimenté en tension et une position fermée selon laquelle le deuxième étage est alimenté en tension.

3. Dispositif de dégivrage selon la revendication 2, **caractérisé en ce que** l'unité de commande (25, 37) est intégrée au circuit de dégivrage/antigivrage (13, 33).

4. Dispositif de dégivrage/antigivrage selon l'une quelconque des revendications 1 à 3, **caractérisé en ce que** la source d'alimentation électrique est constituée par un réseau électrique avion (11).

5. Dispositif de dégivrage/antigivrage selon les revendications 2 et 4, **caractérisé en ce que** le circuit de dégivrage/antigivrage (13) comprend :
- un étage de conversion de puissance (19) alimenté en tension par le réseau électrique avion (11) et relié à l'unité de commande (25), ledit étage de conversion de puissance étant adapté pour convertir la tension alternative délivrée par le réseau électrique avion en tension continue variable ;
- un contacteur (29) dont l'entrée est reliée à la sortie de l'étage de conversion de puissance (19) et la sortie est reliée au deuxième étage chauffant (7) de l'ensemble chauffant (1), ledit contacteur étant commandé par l'unité de commande (25).

6. Dispositif de dégivrage/antigivrage selon l'une quelconque des revendications 1 à 5, **caractérisé en ce que** la source d'alimentation électrique est constituée par un générateur électrique (31).

7. Dispositif de dégivrage/antigivrage selon les revendications 2 et 6, **caractérisé en ce que** le générateur électrique (31) est en outre relié au premier étage chauffant (5) de l'ensemble chauffant (1), et **en ce que** le circuit de dégivrage/antigivrage (33) est constitué par un contacteur (39) dont l'entrée est reliée audit générateur électrique et la sortie est reliée au deuxième étage chauffant (5) de l'ensemble chauffant, ledit contacteur étant commandé par l'unité de commande.

8. Dispositif de dégivrage/antigivrage selon l'une quelconque des revendications 1 à 7, **caractérisé en ce que** l'ensemble chauffant (1) comprend quatre réchauffeurs (3a, 3b, 3c, 3d) répartis sur la périphérie de l'élément de nacelle à protéger contre le givre.

9. Nacelle pour turboréacteur ou turbopropulseur comprenant un dispositif de dégivrage/antigivrage selon l'une quelconque des revendications 1 à 8, **caractérisé en ce que** l'ensemble chauffant (1) est intégré à une lèvre d'entrée d'air de ladite nacelle.

10. Procédé de dégivrage/antigivrage d'un élément de nacelle pour turboréacteur/turbopropulseur, ladite nacelle comprenant un dispositif de dégivrage/antigivrage selon l'une quelconque des revendications 1 à 8, **caractérisé en ce qu'**il comprend les étapes suivantes visant à :
- relever la température d'un élément de nacelle ;
- délivrer au premier étage (5) de l'ensemble chauffant (1) une tension principale variable en fonction de la température relevée ;
- délivrer au deuxième étage (7) de l'ensemble chauffant (1) une tension complémentaire si la valeur de la température de l'élément de nacelle à protéger contre le givre est inférieure à une valeur de température prédéterminée.

11. Procédé de dégivrage/antigivrage d'un élément d'aéronef, ledit élément comprenant un dispositif de dégivrage/antigivrage selon l'une quelconque des revendications 1 à 8, **caractérisé en ce qu'**il comprend les étapes suivantes visant à :
- relever la température d'un élément du composant ;
- délivrer au premier étage (5) de l'ensemble chauffant (1) une tension principale variable en fonction de la température relevée ;
- délivrer au deuxième étage (7) de l'ensemble chauffant (1) une tension complémentaire si la valeur de la température de l'élément d'aéronef à protéger contre le givre est inférieure à une valeur de température prédéterminée.

## Patentansprüche

1. Elektrische Enteisungs-/Vereisungsschutzvorrichtung für ein Turbostrahl-/Turboprop-Gondelelement, umfassend:
- eine Heizanordnung (1), die zwei Heizstufen (5, 7) umfasst, die in dem vor der Eisbildung zu schützenden Gondelelement angeordnet sind;
- eine Schaltung zum Speisen mit elektrischer Energie, die eine Hauptspannung an die erste Stufe (5) der Heizanordnung liefert und umfasst:
-- eine elektrische Speisequelle (11, 31);
--eine Enteisungs-/Vereisungsschutzschaltung (13, 33), die mit der Heizanordnung (1) verbunden ist und von der elektrischen Speisequelle (11, 31) mit Spannung gespeist wird;
wobei die Enteisungsvorrichtung **dadurch gekennzeichnet ist, dass** die zwei Heizstufen (5, 7) in der Dicke der Heizanordnung übereinanderliegende Schichten bilden, dadurch, dass sie weiter Mittel (27a, 27b, 27c, 27d, 29, 39, 25, 37) umfasst, um eine zusätzliche Spannung zu liefern, die die zweite Stufe (7) der Heizanordnung (1) speist, und dadurch, dass die elektrische Speiseschaltung eine einzelne elektrische Speiseschaltung ist, die jede Heizstufe (5, 7) der Heizanordnung mit elektrischer Energie speist.

2. Enteisungs-/Vereisungsschutzvorrichtung nach Anspruch 1, **dadurch gekennzeichnet, dass** die Mittel, um die zusätzliche Spannung zu liefern, weiter umfassen:
- mindestens einen Temperatursensor (27a, 27b, 27c, 27d), der in dem vor der Eisbildung zu schützenden Gondelelement positioniert ist;
- mindestens ein Schütz (29, 39), das in der Enteisungsschaltung (13, 33) integriert ist und weiter am Eingang mit der elektrischen Speisequelle (11, 31) und am Ausgang mit der zweiten Heizstufe (7) der Heizanordnung (1) verbunden ist;
- mindestens eine mit den Temperatursensoren (27a, 27b, 27c, 27d) und mit dem Schütz (29, 39) verbundene Steuereinheit (25, 37), die dafür ausgebildet ist, wechselweise den Übergang des Schützes zwischen einer gesperrten Stellung, der gemäß die zweite Stufe (7) nicht mit Spannung gespeist wird, und einer geschlossenen Stellung zu steuern, der gemäß die zweite Stufe mit Spannung gespeist wird.

3. Enteisungsvorrichtung nach Anspruch 2, **dadurch gekennzeichnet, dass** die Steuereinheit (25, 37) in der Enteisungs-/Vereisungsschutzschaltung (13, 33) integriert ist.

4. Enteisungs-/Vereisungsschutzvorrichtung nach einem der Ansprüche 1 bis 3, **dadurch gekennzeichnet, dass** die elektrische Speisequelle von einem elektrischen Flugzeugnetz (11) gebildet wird.

5. Enteisungs-/Vereisungsschutzvorrichtung nach den Ansprüchen 2 und 4, **dadurch gekennzeichnet, dass** die Enteisungs-/Vereisungsschutzschaltung (13) umfasst:
- eine Leistungswandlungsstufe (19), die von dem elektrischen Flugzeugnetz (11) mit Spannung gespeist wird und mit der Steuereinheit (25) verbunden ist, wobei die Leistungswandlungsstufe dafür ausgebildet ist, die vom elektrischen Flugzeugnetz gelieferte Wechselspannung in variable Gleichspannung zu wandeln;
- ein Schütz (29), dessen Eingang mit dem Ausgang der Leistungswandlungsstufe (19) verbunden ist, und der Ausgang mit der zweiten Heizstufe (7) der Heizanordnung (1) verbunden ist, wobei das Schütz von der Steuereinheit (25) gesteuert wird.

6. Enteisungs-/Vereisungsschutzvorrichtung nach einem der Ansprüche 1 bis 5, **dadurch gekennzeichnet, dass** die elektrische Speisequelle von einem elektrischen Generator (31) gebildet wird.

7. Enteisungs-/Vereisungsschutzvorrichtung nach den Ansprüchen 2 und 6, **dadurch gekennzeichnet, dass** der elektrische Generator (31) weiter mit der ersten Heizstufe (5) der Heizanordnung (1) verbunden ist, und dadurch, dass die Enteisungs-/Vereisungsschutzschaltung (33) von einem Schütz (39) gebildet wird, dessen Eingang mit dem elektrischen Generator verbunden ist, und der Ausgang mit der zweiten Heizstufe (5) der Heizanordnung verbunden ist, wobei das Schütz von der Steuereinheit gesteuert wird.

8. Enteisungs-/Vereisungsschutzvorrichtung nach einem der Ansprüche 1 bis 7, **dadurch gekennzeichnet, dass** die Heizanordnung (1) vier Vorwärmer (3a, 3b, 3c, 3d) umfasst, die am Umfang des vor der Eisbildung zu schützenden Gondelelements verteilt sind.

9. Turbostrahl- oder Turboprop-Gondel, die eine Enteisungs-/Vereisungsschutzvorrichtung nach einem der Ansprüche 1 bis 8 umfasst, **dadurch gekennzeichnet, dass** die Heizanordnung (1) in einer Lufteinlasslippe der Gondel integriert ist.

10. Verfahren zum Enteisen/Vereisungsschutz eines Turbostrahl-/Turboprop-Gondelelements, wobei die Gondel eine Enteisungs-/Vereisungsschutzvorrichtung nach einem der Ansprüche 1 bis 8 umfasst, **dadurch gekennzeichnet, dass** es die folgenden Schritte umfasst, die darauf abzielen:
- die Temperatur eines Gondelelements zu erhöhen;
- der ersten Stufe (5) der Heizanordnung (1) eine in Abhängigkeit von der erhöhten Temperatur variable Hauptspannung zu liefern;
- der zweiten Stufe (7) der Heizanordnung (1) eine zusätzliche Spannung zu liefern, wenn der Wert der Temperatur des vor der Eisbildung zu schützenden Gondelelements kleiner ist als ein vorbestimmter Temperaturwert.

11. Verfahren zum Enteisen/Vereisungsschutz eines Flugzeugelements, wobei das Element eine Enteisungs-/Vereisungsschutzvorrichtung nach einem der Ansprüche 1 bis 8 umfasst, **dadurch gekennzeichnet, dass** es die folgenden Schritte umfasst, die darauf abzielen:
- die Temperatur eines Elements des Bauteils zu erhöhen;
- der ersten Stufe (5) der Heizanordnung (1) eine in Abhängigkeit von der erhöhten Temperatur variable Hauptspannung zu liefern;
- der zweiten Stufe (7) der Heizanordnung (1) eine zusätzliche Spannung zu liefern, wenn der Wert der Temperatur des vor der Eisbildung zu schützenden Flugzeugelements kleiner ist als ein vorbestimmter Temperaturwert.

## Claims

1. An electric deicing/anti-icing device for a turbojet engine/turboprop nacelle element, comprising:
- a heating assembly (1) comprising two heating stages (5, 7) disposed in the nacelle element to be protected from ice;
- an electric energy power supply circuit delivering a principal voltage to the first stage (5) of the heating assembly, and comprising:
∘ an electric power source (11, 31);
∘ a deicing/anti-icing circuit (13, 33) connected to the heating assembly (1) and supplied with voltage by said electric power source (11,31);
the deicing device being **characterized in that** the two heating stages (5, 7) form superimposed layers in the thickness of the heating assembly, **in that** it further comprises means (27a, 27b, 27c, 27d, 29, 39, 25, 37) for delivering a complementary voltage supplying the second stage (7) of the heating assembly (1), and **in that** the power supply circuit is a single power supply circuit that supplies each heating stage (5, 7) of the heating assembly with electric energy.

2. The deicing/anti-icing device according to claim 1, **characterized in that** the means for delivering said complementary voltage further comprise:
- at least one temperature sensor (27a, 27b, 27c, 27d) positioned in the nacelle element to be protected from ice;
- at least one contactor (29, 39) integrated to the de-icing circuit (13, 33) and further connected, at the inlet, to the electric power supply source (11, 31) and, at the outlet, to the second heating stage (7) of the heating assembly (1);
- at least one control unit (25, 37) connected to the temperature sensors (27a, 27b, 27c, 27d) and to the contactor (29, 39), adapted to alternately control the switching of the contactor between an inhibited position in which the second stage (7) is not supplied with voltage and a closed position in which the second stage is supplied with voltage.

3. The deicing/anti-icing device according to claim 2, **characterized in that** the control unit (25, 37) is integrated to the deicing/anti-icing circuit (13, 33).

4. The deicing/anti-icing device according to any one of claims 1 to 3, **characterized in that** the electric power supply source is constituted by an aircraft electric network (11).

5. The deicing/anti-icing device according to claims 2 and 4, **characterized in that** the deicing/anti-icing circuit (13) comprises:
- a power conversion stage (19) supplied with voltage by the aircraft electric network (11) and connected to the control unit (25), said power conversion stage being adapted to convert the alternating voltage delivered by the aircraft electric network into variable direct voltage;
- a contactor (29) whose inlet is connected to the outlet of the power conversion stage (19) and outlet is connected to the second heating stage (7) of the heating assembly (1), said contactor being controlled by the control unit (25).

6. The deicing/anti-icing device according to any one of claims 1 to 5, **characterized in that** the electric power supply source is constituted by an electric generator (31).

7. The deicing/anti-icing device according to claims 2 and 6, **characterized in that** the electric generator (31) is further connected to the first heating stage (5) of the heating assembly (1), and **in that** the deicing/anti-icing circuit (33) is constituted by a contactor (39) whose inlet is connected to said electric generator and outlet is connected to the second heating stage (5) of the heating assembly, said contactor being controlled by the control unit.

8. The deicing/anti-icing device according to any one of claims 1 to 7, **characterized in that** the heating assembly (1) comprises four heaters (3a, 3b, 3c, 3d) distributed over the periphery of the nacelle element to be protected from ice.

9. A nacelle for a turbojet or turboprop engine comprising a deicing/antiicing device according to any one of claims 1 to 8, **characterized in that** the heating assembly (1) is integrated to an air inlet lip of said nacelle.

10. A method of de-icing/anti-icing a nacelle element for a turbojet/turboprop engine, said nacelle comprising a deicing/anti-icing device according to any one of claims 1 to 8, **characterized in that** it comprises the following steps aiming at:
- identifying the temperature of a nacelle element;
- delivering to the first stage (5) of the heating assembly (1) a variable principal voltage according to the identified temperature;
- delivering to the second stage (7) of the heating assembly (1) a complementary voltage when the value of the temperature of the nacelle element to be protected from ice is lower than a predetermined temperature value.

11. A method of de-icing/anti-icing an aircraft element, said element comprising a deicing/anti-icing device according to any one of claims 1 to 8, **characterized in that** it comprises the following steps aiming at:
- identifying the temperature of an element of the component;
- delivering to the first stage (5) of the heating assembly (1) a variable principal voltage according to the identified temperature;
- delivering to the second stage (7) of the heating assembly (1) a complementary voltage when the value of the temperature of the aircraft element to be protected from ice is lower than a predetermined temperature value.
